# EUROPEAN PATENT APPLICATION

(11) **EP 2 246 561 A2**
(43) Date of publication of application: **03.11.2010**
(21) Application number: 10159226.9
(22) Date of filing: 07.04.2010
(51) Int. Cl.: F03D 11/00, F03D 11/04

(54) **Method and device for positioning an object on a tower**

(30) Priority: 08.04.2009 SE 0950230
(71) Applicant: NCC Construction Sverige AB, 170 80 Solna (SE)
(72) Inventor: Jonsson, Torbjörn, 913 32 Holmsund (SE); Myrhaug, Terje Johan, 6004 Ålesund (NO)
(74) Representative: Holmberg, Nils Anders Patrik

(57) **Abstract**

A method and a device for positioning an object on a tower (2) are described. The tower (2) which has a substantially vertical longitudinal axis (40) comprises an upper end (20) and a lower end (19), and an elongated climbing means (5) is arranged substantially between said lower end (19) and said upper end (20). A platform (8) comprising a first beam (9) and a second beam (10) are arranged in engagement with said climbing means (5). At least a part of an object, for example an engine house, is arranged on the platform (8). According to the invention, a third beam (21) with a longitudinal axis (25) and a fourth beam (22) with a longitudinal axis (26) are arranged at the upper end (20) of the tower (2). The platform (8) is transferred from the lower end (19) of the tower (2) along a climbing means (5) to the upper end (20) of the tower (2) so that the longitudinal axis (23) of the first beam (9) substantially coincides with the longitudinal axis (25) of the third beam (21) and the longitudinal axis (24) of the second beam (10) substantially coincides with the longitudinal axis (26) of the fourth beam (22) when the platform (8) is arranged in the upper end (20) of the tower (2) and then said at least a part of or the entire object is transferred from said first and second beams (9, 10) of the platform (8) to the third beam (21) and the fourth beam (22).

## Description

### Technical field

The present invention relates to a method and a device for positioning an object on a tower, preferably a wind power tower.

### Background of the invention

Wind power plants often comprise a tower in which top there is provided a generator and a rotor adapted to run the generator. The effect of the wind power plant depends upon the wind velocity. On the other hand, at moderate heights the wind velocity increases with increasing height over the surrounding terrain. The wind velocity dependence of increasing height is particularly stated when the wind power plants are located in forest land.

Known wind power plants often do not have towers that are more than 100 meters high. It would be desirable to provide higher towers to be able to increase the energy production from the wind power plants. An increase of the tower height from 100 meters to 150 meters can enable an increase of the energy production with 100 %. When building a wind power plant, the wind power tower is first erected and then the engine house with a generator and possibly a gear box, and also the rotor is placed on its top. To pull up the engine house and the rotor, a mobile crane is used. However, there are few mobile cranes with a lift height of over 100 meters and hardly anyone with a lift height of 150 meters. This means that it is long waiting time to get hold of cranes with a high lifting height. Hence, with prior art, it is difficult to build wind power plants that has a tower that is essentially higher than 100 meters and in particularly if the tower is nearly 150 meters high.

It is known from e.g. US 6,357,549 to provide guide rails on the outside of a wind power towers on which a platform is arranged to climb up and down the tower. A drawback with the solution described in said US-patent is that the platform is relatively big and hence heavy. It is difficult to lift a big platform up the tower. Another drawback with above mentioned US-patent is that a device for exact positioning is missing. Yet another drawback with said US-patent is that the objects that are lifted to the top of the tower have to be provided with a guide rail part so that the beam arrangement can be lowered down the tower again. This means that also the rotor and the turbine have to be provided with such a guide rail part, which results in that these parts will be exposed to very high forces when the beam arrangement is lowered down these parts. Considering the dimension of these parts, it is difficult to see that this can be accomplished. When the generator is lifted to the top of the tower, it has to be maneuvered in of the top over the tower so that the generator thereafter can be lowered to the right position. This maneuvering operation has to be done with great precision to be able to lower and fasten the generator on the top of the tower. This also holds for the rotor that has to be maneuvered with even greater precision to be able to maneuver it in the right position on the generator.

### Summary of the invention

An object of the present invention is to provide a device and a method for lifting an object, such as an engine house or a part of an engine house, to the top of a tower, more exactly a wind power tower, which simplify the handling of the object.

A another object of the present invention is to provide a device and a method for lifting an object, such as an engine house or a part of an engine house, to the top of a power plant tower without the use of a mobile crane with great lifting height.

At least one of these objects is achieved with a method and a device according to the independent claims.

Additional advantages of the invention are achieved with the features defined in the dependent claims.

A fundamental idea with the present invention is to provide a climbing means on the wind power tower, to provide a platform that is adapted to climb on the climbing means and to provide beams at the upper end of the tower, which said platform is adapted to connect to when it is located in the upper end of the tower. The engine house or a part of the engine house can be lifted to the upper end of the tower with said platform.

Yet another idea with the present invention is to provide equipment for transferring and positioning the engine house or a part of the engine house in an exact manner from the platform to the upper end of the tower by means of transferring means which pull the engine house or a part of the engine house from the platform to the upper end of the tower.

According to a first aspect of the present invention there is provided a method for positioning an object on a tower with an essentially vertical longitudinal axis, which tower comprises an upper end and a lower end, and also a elongated climbing means disposed at least substantially between said lower end and said upper end, comprising the steps of providing a platform in engagement with said climbing means, wherein the platform on its upper side comprises a first beam with a longitudinal axis and a second beam with a longitudinal axis, disposed substantially horizontal and parallel to each other, providing at least a part of said object on said first beam and said second beam. The method comprises the steps of providing a third beam with a longitudinal axis and a fourth beam with a longitudinal axis at the upper end of the tower, which are disposed substantially horizontal and parallel to each other and on equal mutual distance from each other as said first beam and said second beam, lifting the platform from the lower end of the tower along the climbing means to the upper end of the tower so that the longitudinal axis of said first beam substantially coincide with the longitudinal axis of said third beam and the longitudinal axis of said second beam substantially coincide with the longitudinal axis of said fourth beam when the platform is disposed in the upper end of the tower, and when the platform is located in the upper end of the tower moving said at least a part of or the entire object from said first and second beams of the platform to said third beam and said fourth beam.

By providing a platform according to the present invention it is possible to make the platform on which the object is lifted smaller than in methods according to prior art. This results in a smaller torque that has to be carried by the climbing means. The engine house or the part of the engine house can be positioned in upper part of the tower from the third beam and the fourth beam.

The climbing means can be designed in many different ways. The climbing means comprises advantageously at least one guide on which the platform is guided. The climbing means comprises advantageously also a number of equally separated projections on which the platform can climb. The third beam and the fourth beam can be disposed on opposite sides of the longitudinal axis of the tower. This is the advantageous way of providing the beams because the torque that has to be carried by the beams is then minimized. However, it is possible to dispose the beams on the same side of the longitudinal axis of the tower.

Before the engine house or the part of the engine house is transferred from said first beam and said second beam to said third beam and said fourth beam, the platform is disposed so that the distance between said first beam and said third beam, and also between said second beam and said fourth beam do not exceed a predefined distance. By providing the platform so that said distance is not allowed to be too long the transmission of the object from the first beam and the second beam to the third beam and the fourth beam is made easier. The predefined distance is advantageously 50 millimeters, preferably 10 millimeters and mostly preferred 5 millimeters.

The method can comprise the step of providing said at least part of the object on at least a first sleigh arranged on said first beam when the platform is lifted up the tower and a second sleigh arranged on said second beam. By providing the object on sleighs the transport of the object on the beams is made easier. With sleigh it is referred to a device that substantially only can move along the longitudinal axis of the associated beam.

The method can also comprise the step of providing sliding means on each of the sleighs, which sliding means are provided to be in contact with the beams to decrease the friction between the sleighs and the beams. Within the scope of the invention it is possible to alternatively provide wheels on the sleighs. However it can be advantageously with the friction appearing by means of sliding means. Furthermore, it is simpler and cheaper to arrange sliding means on the sleighs instead of wheels.

Said sliding means on the sleighs can be of any plastic material. There are a great number of different plastic materials and a person skilled in the art can easily choose a suitably plastic material in the light of the desired friction between the sleigh and the beam. Within the scope of the invention it is however possible to use other materials for the sliding means.

Preferably, the sleighs are pulled along the beams in a method according to the present invention. This can be achieved in many ways. Resistance to the traction force on the sleighs is obtained in practice from the upper end of the tower. When the sleighs are pulled along the first and the second beam, the friction between the sleighs and the beams will give the first and the second beam and therewith the platform a force against the tower. This can lead to that the distance between the first beam and the third beam, and also the distance between the second beam and the fourth beam is decreasing. The decrease in distance is due to the stiffness of the platform and the climbing means. However, the traction force will prevent said distance from increasing.

The sleighs can be pulled forward along the beams by means of fastening means which repeatedly are moved forward a bit in front of the sleigh and is fastened at the beam whereupon the sleigh is pulled forward towards to fastening means. The fastenings means are then functioning as counter stay for the traction force on the sleighs. When the fastening means are fastened on the third and the fourth beam, while the sleighs are still located on the first beam and the second beam the friction between the sleighs and the beams will result in a force on the first and the second beam in the direction against the third and the fourth beam.

According to a second aspect of the invention a device for lifting an object, in form of e.g. an engine house, is provided in the upper end of a tower, comprising an upper end and a lower end, with a substantially longitudinal axis. The device comprises a elongated climbing means provided at least substantially between said lower end and said upper end of the tower, a platform adapted to be in engagement with said climbing means and adapted to be lifted from substantially the lower end of the tower along the climbing means up to said upper end of the tower and lowered down the tower thereafter. The platform comprises on its upper side a first beam with a longitudinal axis and a second beam with a longitudinal axis arranged substantially horizontal and parallel with each other, on which beams the object can be provided. The device is **characterized in that** it comprises a third beam with a longitudinal axis and a fourth beam with a longitudinal axis, which are provided in the upper end of the tower substantially horizontal and parallel with each other and on the same mutual distance that the first beam and the second beam, wherein the platform, when it has reached upper end of the tower, is arranged in a transfer position in which the longitudinal axis of the first beam substantially coincide with the longitudinal axis of the third beam and the longitudinal axis of the second beam substantially coincide with the longitudinal axis of the fourth beam, and a transferring means arranged for transferring the object from said first and second beams of the platform to said third and fourth beams.

With a device according to the invention the platform used to lift the object to the upper end of the tower is less complex. The torques on the platform and on the climbing means are minimized as the forces are transferred straight downwards to a greater extent than devices according to prior art.

The distance between the first beam and the third beam and also between the second beam and the fourth beam can be arranged so that it does not exceed a predefined distance when the platform is arranged in a transferring position. Hence, the transfer of the object from the first and second beams to the third and fourth beams is made easier.

Said predefined distance is advantageously 50 millimeters, preferably 10 millimeters and most preferably 5 millimeters.

The transferring means can comprise at least a front sleigh for each of the first beam and the second beam, which sleighs comprises a frame and are adapted to carry the object and a forward transporting means for each of the front sleighs, which forward transporting means are adapted for moving the associated front sleigh forward. The transfer member preferably also comprises a rear sleigh for each of the first beam and the second beam. The front and the rear sleigh can be connected with any pull transferring means. Alternatively, the object itself can serve as a connection between the front and the rear sleigh.

Each of the forward transporting means can comprise a fastening means which is adapted to be fastened in or released from the associated beam and which is fastened to the associated sleigh with at least a bar which is fixedly mounted in one of the fastening member or the sleigh and which is movably arranged in the other of the fastening means or the sleigh. With such a transferring means the sleigh can be moved forward along the beams.

At least a part of said bar can be a screw, wherein a motor driven nut is arranged on the fastening means or the sleigh and arranged on the screw so that the bar can be moved in relation to the motor driven nut and hence the sleigh can be moved in relation to the fastening member. With a screw or a nut according to above, the sleigh can thus be moved forward by fastening the fastening means in the beam and the distance between the fastening means and the sleigh is decreased by means of screwing the nut in relation to the screw. With a screw and a nut it is also possible to provide exact adjustment of the sleighs so that the position of the object can be adjusted more exactly.

The beams can be provided with holes on the upper side and the fastening means can be provided with a movable tap that can be inserted in any of the holes of the beam to fasten the fastening means in the beam. Said way of providing locking of said fastening means at the beam is relatively uncomplicated. However, there are a number of other possibilities for fastening the fastening means to the beam within the scope of present invention.

The fastening means is preferably arranged on that side of the associated sleigh which is located closest to the third or the fourth beam, so that the fastening means is transferred from the first or the second beam to the third or the fourth beam, respectively, before the associated sleigh and so that the sleigh is pulled forward towards the fastening member. Within the scope for the present invention it is possible to slide the sleighs in a forward direction with a force from the fastening means. In accordance with the description above it is however very advantageously to pull the sleigh on the beams.

There can be provided a sliding means between the frame and the associated beam for each of the sleighs. With sliding means it is possible to provide a low friction between the sleighs and the beams in a proportionately easy way. It is possible to use wheels instead of sliding means between the frame and the associated beam. However, it is less complicated to use sliding means.

On the side of the frame of the sleighs facing away from the beam there can be provided a first plate which is slidable by means of a sliding device perpendicular to the longitudinal axis of the associated beam and perpendicular to the vertical longitudinal axis of the tower, said plate is adapted to carry the object. With such a first plate it is possible to adjust the position of the object across the longitudinal axis of the beam.

The sliding device for sliding the first plate perpendicular to the longitudinal axis of the associated beam can be designed in many ways. According to one alternative embodiment the sliding device comprises a screw movable along its longitudinal axis by way of a motor driven lateral movement nut provided on the sleigh of the frame. With a sliding device driven by means of screwing a nut forward, it is possible to exact adjust the position of the first plate and hence also the position of the object.

Within the scope of the invention, it is of course possible to provide removal of said first plate by way of other means than with one or more screws and nuts. It is e.g. possible to use hydraulic pistons.

On the side of the plate facing away from the beam, it can be provided a second plate displaceable parallel to the vertical longitudinal axis of the tower, which second plate is arranged to carry the object. With such a plate, displacement of the object in a vertical direction is possible. The vertical adjustment can be performed in many different ways. For example, a hydraulic piston can be used for the vertical adjustment. Alternatively, the vertical adjustment can be performed with one or more screws and nuts like the adjustment perpendicular to the longitudinal axis of the beams.

The vertical adjustment is used primary for exact adjustment in vertical direction or for lowering the engine house at the upper end of the tower. In case that the object being lifted up the tower is a rotor or a rotor hub which is going to be fixed on the engine house, it is not necessary to transfer the object from the first and second beam to the third and fourth beam. The vertical position of the platform is then used as a rough adjustment in height while vertical adjustment of the second plate is used as an exact adjustment.

The characteristics described above can of course be combined in the same embodiment where applicable.

In the following, preferred embodiments of the invention will be described with reference to the attached drawings.

### Short description of the drawings

Fig. 1 shows a wind power plant comprising a wind power tower and an engine house with a rotor arranged in the upper end of the wind power tower.
Fig .2 shows a side view of the upper end of the wind power tower and a device according to the invention.
Fig.3 shows a side view of the upper end of the wind power tower and a device according to the invention when the engine house is being transferred from the platform to the wind power tower.
Fig.4 shows a top view of the upper end of the wind power tower and a device according to the invention.
Fig.5 shows a view perpendicular to Fig.2 of the upper end of the wind power tower and a device according to the invention.
Fig.6 shows a side view of a sleigh and a forward transporting means arranged on a beam.
Fig.7 shows a side view of the sleigh and the forward transporting means.
Fig.8 is a cross-section view from above of one of the climbing beams and a part of the platform.

### Description of preferred embodiments

In the following description of preferred embodiments of the invention, similar details in the different drawings will be denoted by the same reference number.

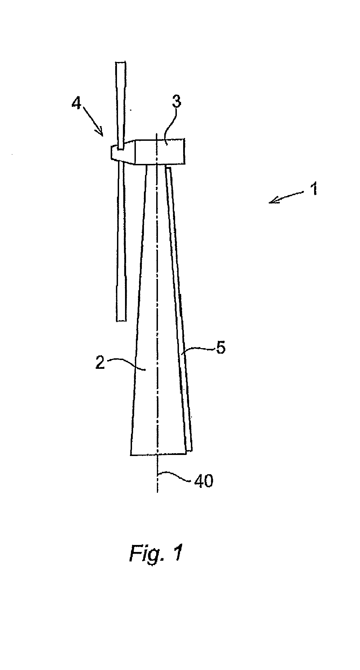

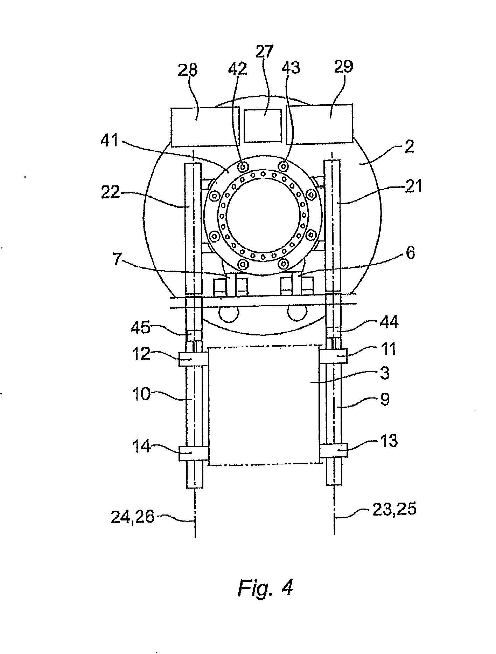

Fig.1 schematically shows a wind power plant 1 comprising a tower 2 with a substantially vertical longitudinal axis 40 and an engine house 3 with a rotor 4 arranged in the upper end 20 of the wind power tower 2. On the tower 2 there is arranged an elongated climbing means 5, which advantageously is dismounted after placing the engine house and the rotor in the upper end 20 of the tower 2. The tower 2 can be built in a number of different ways. According to a preferred embodiment the tower 2 is casted by way of sliding form casting, which in itself is a known technique for casting in concrete. After that the tower 2 is casted bracing cables can be arranged in or at the wall of the tower 2, which bracing cables 42 (Fig.4) are stretched after the tower has been built to prestress the concrete. By prestressing the concrete the tower 2 can cope with heavier loads than it would have done with do with merely non-tensioned reinforcement.

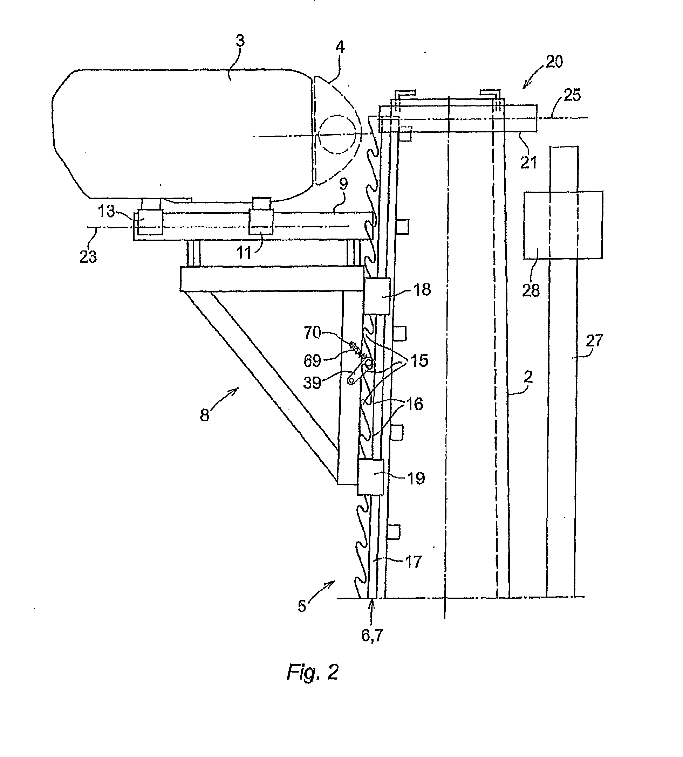

Fig.2 shows a top view of the tower 2 and a device according to the invention. The rotor 4 is shown with dashed lines as a rotor hub only. The rotor can either be lifted up the tower separately or together with the engine house and either with rotor blade or without rotor blade. The climbing means comprises two parallel climbing beams 6, 7, of which only one is shown in Fig.2. A platform 8 is arranged in engagement with the climbing beams 6, 7, and can be guided up and down along the climbing means 6, 7. In Fig.2, the platform 8 is on its way up the climbing beams 6, 7, but they have not yet reached the upper end 20 of the tower 2. The platform 8 comprises on its upper side a first beam 9 with a longitudinal axis 23 and a second beam 10 (not shown in Fig.2) with a longitudinal axis 24 which is essentially parallel to the longitudinal axis 29 of the first beam 9. In Fig.2 the engine house 3 is arranged on the first beam 9. A second sleigh 12 (not shown in Fig.2) is arranged on the second beam 10.

The engine house 3 is also arranged on a third sleigh 13 which is arranged on the first beam 9 and a fourth sleigh 14 (not shown in Fig.2) which is arranged on the second beam 10 (not shown in Fig.2). The climbing beams 6, 7, comprises tooth shaped projections 15 directed upwards, between which there are arranged seats 16, in which a climbing means which is arranged on the platform 8, can support against when climbing up along the climbing beams 6, 7 with the platform. On the climbing beams 6, 7, there are provided guides of which a first guide 17 is shown in Fig.2. The platform 8 has a first steering shoe 18 and a second steering shoe 19 which are engaged with said first guide 17 to guide the platform when moving up or down the climbing beams 6, 7. In the upper end 20 of the tower 2 there is arranged a third beam 21 with a longitudinal axis 25 and a fourth beam 22 (not shown in Fig.2) with a longitudinal axis 26 which is essentially parallel with the longitudinal axis 25 of the third beam 21. The climbing beams 6, 7 are arranged one side of the tower 2. On the opposite side of the tower there is provided an elevator tower 27 on which there is arranged a first elevator 28 and a second elevator 29 (Fig.4). By means of the elevators 28, 29, personnel can move up and down the tower without needing to use the platform 8. In Fig.2 the elevator tower 27 and the elevators 28, 29, are located essentially opposite to the climbing means 5. Within the scope of the invention it is however possible to locate the elevator tower 27 and the elevators 28, 29, also in other angled positions in relation to the climbing means 5.

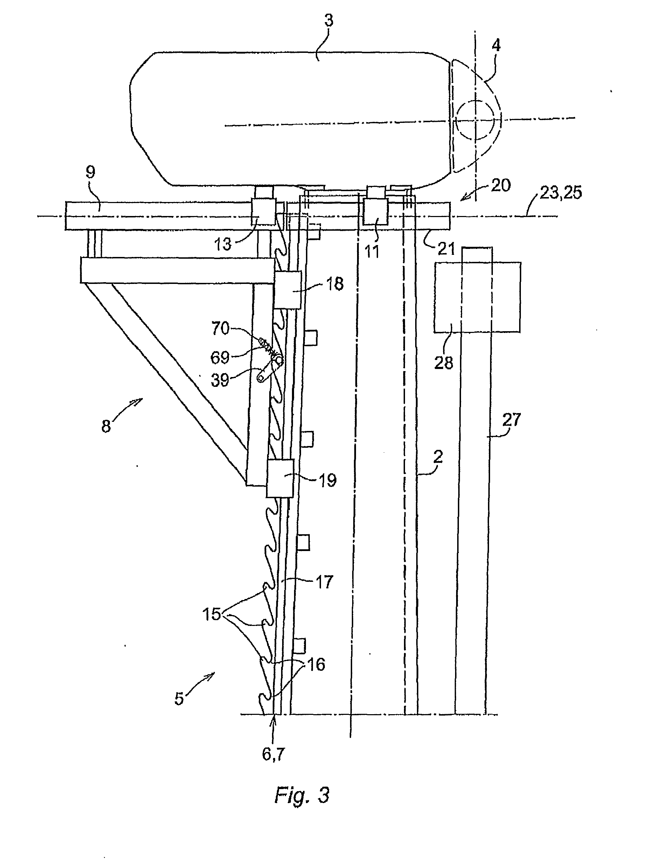

Fig.3 shows a side view of the upper end 20 of the tower 2 and a device according to the invention when the platform has been lifted up to the upper end 20 of the wind power tower. The first beam 9 and the second beam 10 are arranged so that the longitudinal axis 23 of the first beam 9 essentially coincides with the longitudinal axis 25 of the third beam 21 and so that the longitudinal axis 24 of the second beam 10 essentially coincides with the longitudinal axis 26 of the fourth beam 22. Additionally, the distance between the first beam 9 and the third beam 21 and the distance between the second beam 10 and the fourth beam 22 is less than a predefined distance and sufficiently short to allow the sleighs on the first beam 9 and on the second beam 10 to cross to the third beam 21 and the fourth beam 22, respectively. The predefined distance is 50 millimeters, preferably 10 millimeters and most preferably 5 millimeters. In Fig.3, the engine house 3 is on its way from the platform 8 over to the wind power tower. The first sleigh 11 has been moved a bit in on the third beam 21 while the second sleigh 13 is approaching the joint between the first beam 9 and the third beam 21. How the movement of the sleighs 11 and 13 and the engine house 3 is performed will be described below.

Fig.4 shows a view from above of the upper end of the tower 2 and a device according to the invention. As is clear from the figure, the tower is hollow and comprises a wall 41. The third beam 21 and the fourth beam 22 are fixed arranged in the upper end of the tower 2 and are arranged on opposite sides of the tower 2. In the Fig.4 the platform has been lifted up to upper end 20 of the tower 2 so that the longitudinal axis 23 of the first beam 9 essentially coincides with the longitudinal axis 25 of the third beam 21 and so that the longitudinal axis 24 of the second beam 10 essentially coincides with the longitudinal axis 26 of the fourth beam 22. The engine house 5 is resting on a first sleigh 11 and a third sleigh 13 which are arranged on the first beam 9, and also on a second sleigh 12 and a fourth sleigh 14 which are arranged on the second beam 10. A first forward transporting means 44 is connected to the first sleigh 12 and a second forward transporting means 45 is connected to the second sleigh 12. The forward transporting means 44, 45 are provided for transferring the engine house 3 from the platform 8 to the top 20 of the tower 2 by pulling the sleighs 11, 12, 13, 14, and the engine house 3 from the platform 8 to the third beam 21 and the fourth beam 22. The sleighs 11, 12, 13, 14, and the forward transporting means 44, 45 constitute a transferring means. The climbing means 6, 7 are arranged on one side of the tower 2. On the opposite side of the tower there is arranged an elevator tower 27 on which there is arranged a first elevator 28 and a second elevator 29. By means of the elevators 28, 29, personnel can move up and down the tower without needing to use the platform 8. Bracing cables 42 are arranged in channels 43 in the wall 41 of the tower 2.

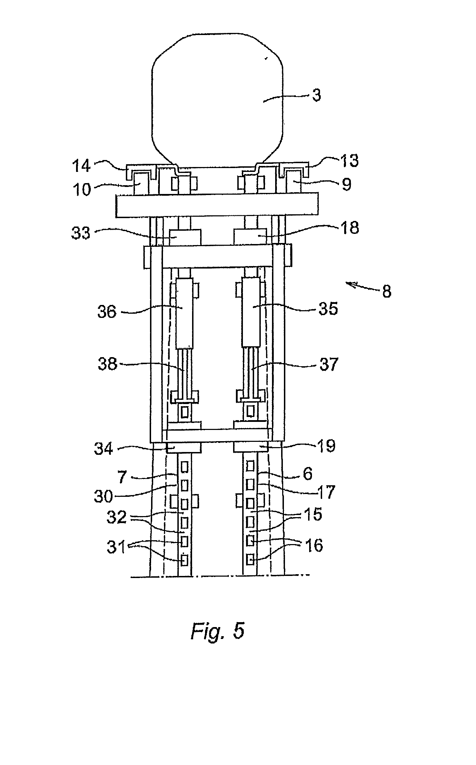

Fig.5 shows in a view perpendicular to Fig.2 the upper end of the wind power tower and a device according to the invention. The platform 8 is arranged in engagement with the climbing beams 6, 7. As mentioned above the first climbing beam 6 comprises a first guide 17 and also a number of projections15 and intermediate seats 16. Correspondingly the second climbing beam 7 comprises a second guide 30 and also a number of projections 31 and intermediate seats 32. The platform 8 comprises a first steering shoe 18 and a second steering shoe 19 in engagement with the first guide 17 and a third steering shoe 33 and a fourth steering shoe 34 in engagement with the second guide 30 for guiding the platform when moving up or down the climbing beams 6, 7. A first lifting cylinder 35 is mounted in the platform 8 and comprises a movable piston 37 which is in engagement with any of the seats 16 on the first climbing beam 6. A second lifting cylinder 36 is mounted in the platform 8 and comprises a movable piston 38 in engagement with any of the seats 32 on the second climbing beam 7. By pushing out the movable pitons 37, 38, the platform 8 is transported up along the climbing beams 6, 7. When the movable pistons 37, 38 have been pushed out their full length, they are retracted again to take a new grip of projection 15, 31 located higher on the climbing beams. Meanwhile the platform 8 is prevented from sliding down the climbing beams 6, 7 by means of a hydraulic maneuvered catch lever 39 (Fig.2). The catch lever 39 is controlled by the hydraulic piston 70. A spring 69 is arranged to load the catch lever 39 (Fig.2) inwards against the projections 15. In the event of a pressure loss in the hydraulic piston 70 the spring 69 ensures that the catch lever 39 (Fig.2) engage with the projection 15.

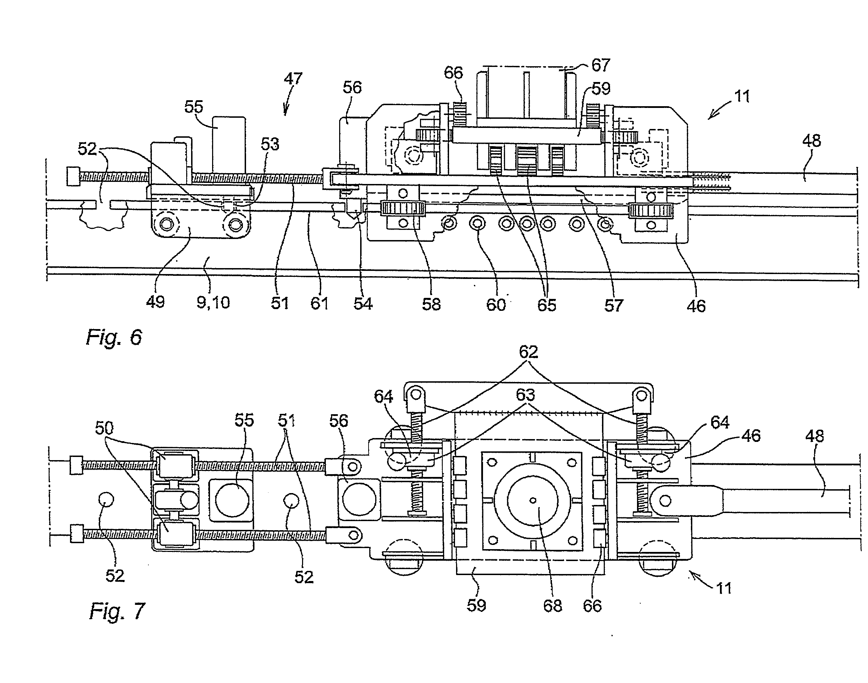

Fig.6 shows side view of the first sleigh 11 and a forward transporting means 47, arranged on the first beam 9. Fig.7 shows the sleigh 11 and the forward transporting means 47 in a view from above. The forward transporting means 44, 45 in Fig.4 have the same construction as the forward transporting means 47 shown in Fig.6 and Fig.7. The sleigh 11, comprise a frame 46 and is arranged to carry a part of an object in the shape of an engine house 3. A forward transporting means 47 is fixed arranged to the first sleigh 11, which forward transporting means 47 is arranged for forwarding the first sleigh 11. The first sleigh 11 is coupled to the third sleigh 13 (not shown in Fig.6) by means of a coupling bar 48 so that the distance between the first sleigh 11 and the third sleigh 13 is kept constant. If the friction between the sleighs and the object in the shape of the engine house is high enough, the engine house can alternatively function as clutch and wherein the coupling bar 48 can be eliminated. The forward transporting means 47 comprise a fastening means 49 arranged to be connected in or disconnected from the associated beam 9 and which is connected to the associated sleigh 11 by means of at least a bar which is fixedly mounted in the sleigh and which is movably mounted in the fastening means 49. In the embodiment shown, said at least one bar is two screws 51 and motor driven nuts 50 are arranged on the fastening means 49 and arranged on the screws. The screws 51 can be moved in relation to the motor driven nuts 50 and the sleigh 11 can therewith be moved in relation to the fastening means 49. The beam 9 comprise holes 52 on the upper side and the fastening means 49 comprise a first movable pin 53 which can be inserted in any of the holes 52 in the beam 9 from a first pin transporting means 55 for connecting the fastening means 49 in the beam 9. The fastening means 49 is arranged on the side of the associated sleigh 11 closest to the third beam 21 or the fourth beam 22, so that the fastening means 49 moves from the first beam 9 or the second beam 10 to the third beam 21 or the fourth beam 22, respectively, before the associated sleigh 11, 12 and so that the sleigh 11, 12 is pulled towards the fastening means 49. In the embodiment shown there is also provided a second movable pin 54 which is insertable in any of the holes 52 in the beam 9 from a second pin transporting means 56. By providing a second movable pin 54 it is guaranteed that the sleigh 11 would not move when the fastening means 49 is guided back towards the sleigh 11. There is provided a sliding means 57 between the frame 46 and the associated beam 9. The sliding means 57 can be made of any plastic material.

The sleigh also comprises side wheels 58 which are adapted to roll against the sides of the beam 9 to guide the sleigh sideways across the longitudinal axis 23 of the beam 9. The sleigh also comprises underlying wheels 60 which are adapted to roll against the underside 61 of the beam 9. In the embodiment shown the underside 61 is the underside of the upper part of the I-shaped beam 9.

On the side of the frame 46 of the sleigh 11 facing away from the beam 9 there is provided a first plate 59 which is slidable by means of a sliding device perpendicular to the longitudinal axis 23 of the beam 9 and perpendicular to the vertical longitudinal axis 40 of the tower 2, which first plate 59 is adapted to carry the object in the shape of the engine house 3. On the plate there are adapted two side transporting screws 62 extending through two motor driven side transporting nuts 63 which are rotatable in relation to the house 64 fixedly mounted in the frame 46. By rotating the nuts 63 the screws 62 and therewith the first plate 59 will move in relation to the frame 46. On the first plate 59 there is provided flat wheels 65 so that the first plate 59 can roll against the frame 46. On the frame 46 there is provided resisting wheels 66 which are adapted to abut against the side of the first plate 59 facing away from the beam to prevent the first plate 59 from moving up from the frame 46.

On the side of the first plate 59 facing away from the beam 9, there is provided a second plate 67 which is slidable parallel to the vertical longitudinal axis 40 of the tower, which second plate 67 is provided to carry the object and which second plate 67 constitute the upper side of the hydraulic piston 68.

The second sleigh has similar shape as the above described first sleigh 11. The third and fourth sleighs have similar design as the first and the second sleigh except for the forward transporting means 47.

In the embodiment described the engine house is provided with the bracket for the rotor facing away from the climbing means. It is however possible to arrange the engine house in the other direction. In the case of using the climbing means and the platform to lift the rotor up the tower it is desirable that the engine house is turned in the other direction. As an alternative to lifting the rotor up the tower with the platform and the climbing means, the rotor can be lifted up the tower by means of a crane which is arranged on the platform. As the rotor is much lighter than the engine house such a crane does not have to be as big as if the engine house would have been lifted with the crane. To minimize the weight that the crane has to lift, the rotor can be lifted in parts which can be mounted together afterwards. Consequently, the rotor hub and the rotor blades can be lifted up the tower in turn.

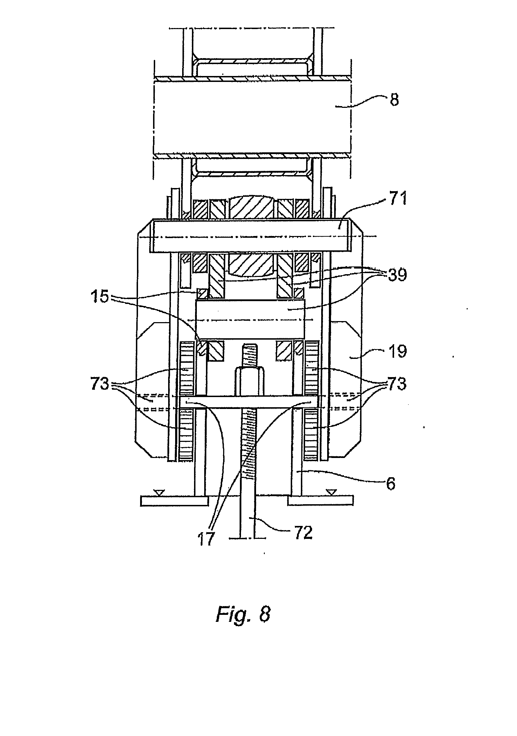

Fig.8 is a cross sectional view from above one of the climbing beams 6 and a part of the platform 8. In the figure the second steering shoe 19 is shown, which is in engagement with the climbing beam 6. The catch lever 39 is pivotable about the axis 71 and is in engagement with the projections 15. The climbing beam 6 is mounted in the tower 2 by means of bolts 72. On the steering shoe 19 there is provided wheels 73 which are adapted to guide the steering shoe 19 against the climbing beam 6.

The invention is in no way restricted to the above mentioned embodiments of the present invention. A person skilled in the art can modify the above described embodiments in many ways without departing from the scope of the invention that is only limited by the attached claims.

As an alternative of providing a sliding means between the frame 46 and the associated beam 9, there can be provided wheels on the frame 46 so that the frame 46 can roll against the beam 9.

It is of course also possible to achieve the vertical movement of said second plate 67 in another way than by means of the hydraulic piston 68 described.

Even if the invention has been described applied on a concrete tower produced by sliding form casting, it is possible to also apply the invention on other towers such as steel towers and concrete towers consisted of several concrete members.

In the embodiment above the forward transporting means comprise two screws 51. However, it is possible to replace said screws 51 with a screw or more than two screws.

## Claims

1. Method for positioning an object on a tower (2) with an essentially vertical longitudinal axis (40), which tower (2) comprises an upper end (20) and a lower end (19), and also a elongated climbing means arranged at least substantially between said lower end (19) and said upper end (20), comprising the steps of providing a platform (8) in engagement with the climbing means (5), wherein the platform (8) on its upper side comprises a first beam (9) with a longitudinal axis (23) and a second beam (10) with a longitudinal axis (24), arranged substantially horizontal and parallel with each other, providing at least a part of said object on the first beam (9) and on the second beam (10), **characterized in that** the method also comprises the steps of providing a third beam (21) with a longitudinal axis (25) and a fourth beam (22) with a longitudinal axis (26) at the upper end (20) of the tower, which are arranged substantially horizontal and parallel with each other and on the same mutual distance as the first beam (9) and the second beam (10), lifting the platform (8) from the lower end (19) of the tower (2) along the climbing means (5) to the upper end (20) of the tower (2) so that the longitudinal axis (23) of the first beam (9) substantially coincides with the longitudinal axis (25) of the third beam (21) and the longitudinal axis (24) of the second beam (10) substantially coincides with the longitudinal axis (26) of the fourth beam (22) when the platform is arranged in the upper end (20) of the tower (2), and when the platform (8) is located in the upper end (20) of the tower (2) transferring said at least a part of or the entire object from said first and second beams (9, 10) of the platform (8) to the third beam (21) and the fourth beam (22).

2. Method according to claim 1, wherein the platform (8), before said object is transferred from the first beam (9) and the second beam (10) to the third beam (21) and the fourth beam (22), is arranged so that the distance between the first beam (9) and the third beam (21), and also between the second beam (10) and the fourth beam (22) do not exceed a certain predefined distance.

3. Method according to any of the predefined claims, comprising the step of providing said at least part of an object on at least a first sleigh (11) which is arranged on the first beam (9) when the platform (8) is lifted up the tower and a second sleigh (12) which is arranged on the second beam (10).

4. Method according to claim 3, comprising the step of providing sliding means (57) on each of the sleighs (11, 12, 13, 14) which sliding means (57) are arranged to be in contact with the beams (9, 10, 21, 22) to decrease the friction between the sleighs (11, 12, 13, 14) and the beams (9, 10, 21, 22).

5. Method according to any of the claims 3 and 4, wherein the sleighs (11, 12, 13, 14) is pulled forward on the beams by means of fastening means (49) which repeatedly are moved forward a bit in front of the sleigh (11, 12, 13, 14) and is fastened in the beam (9, 10, 21, 22) as the sleigh (11, 12, 13, 14) is pulled forward to the fastening means (49).

6. Device for positioning an object in the upper end (20) of a tower (2), comprising an upper end (20) and a lower end (19), with a substantially vertical longitudinal axis (40), which device comprises an elongated climbing means (5) which is arranged at least substantially between said lower end (19) and said upper end (20) of the tower (2), a platform (8) adapted to be in engagement with the climbing means (5) and adapted to be lifted from substantially the lower end (19) of the tower (2) along the climbing means (5) up to said upper end (20) of the tower (2) and down again, wherein the platform (8) on its upper side comprises a first beam (9) with a longitudinal axis (23) and a second beam (10) with a longitudinal axis (24) arranged substantially horizontal and parallel to each other, on which beams (9, 10) the object can be arranged, **characterized in that** the device comprises a third beam (21) with a longitudinal axis (25) and a fourth beam (22) with a longitudinal axis (26) which are arranged in the upper end (20) of the tower (2) substantially horizontal and parallel with each other and on the same mutual distance as the first beam (9) and the second beam (10), wherein the platform (8) when it has reached the upper end (20) of the tower (2) is arranged in a transferring position in which the longitudinal axis (23) of the first beam (9) substantially coincides with the longitudinal axis (25) of the third beam (21) and the longitudinal axis (24) of the second beam (10) substantially coincides with the longitudinal axis (26) of the fourth beam (22), and a transferring means adapted for transferring of the object from said first and second beams (9, 10) of the platform (8) to the third beam (21) and the fourth beam (22).

7. Device according to claim 6, wherein the distance between the first beam (9) and the third beam (21), and also between the second beam (10) and the fourth beam (22) does not exceed a certain predefined distance, when the platform (8) is arranged in a transferring position.

8. Device according to claim 6 or 7, wherein the transferring means comprises at least a front sleigh (11, 12) for each of the first beam (9) and the second beam (10), which sleighs (11, 12) comprises a frame (46), and are adapted to carry the object, and also a forward transporting means (44, 45) for each of the front sleigh (11, 12), which forward transporting means (44, 45) are adapted for forwarding the associated front sleigh (11, 12).

9. Device according to claim 8, wherein each of the forward transporting means (44, 45) comprises a fastening means (49) which is adapted to be fastened to or released from the associated beam (9, 10), and which is fastened to the associated sleigh (11, 12) by means of at least a bar which is fixedly mounted in one of the fastening means (49) and the sleigh (11, 12) and which is movably mounted in the other of the fastening means (49) and the sleigh (11, 12).

10. Device according to claim 9, wherein at least a part of the bar is a screw (51) and wherein a motor driven nut (50) is arranged on the fastening means (49) or the sleigh (11, 12) and arranged on the screw (51) so that the bar can be moved in relation to the motor driven nut (50) and therewith the sleigh (11, 12) can be transported in relation to the fastening means (49).

11. Device according to claim 9 or 10, wherein the beams (9, 10) comprises holes (52) on the upper side and the fastening means (49) comprises a movable pin (53) which can be inserted in any of the holes (52) in the beam (9, 10) to fasten the fastening means (49) in the beam (9, 10).

12. Device according to any of the claims 9, 10 or 11, wherein the fastening means (49) is arranged on the side of the associated sleigh (11, 12) closest the third beam (21) or the fourth beam (22), so that the fastening means (49) moves from the first beam (9) or the second beam (10) to the third beam (21) or the fourth beam (22), respectively, before the associated sleigh (11, 12) and so that the sleigh (11, 12) is pulled forward towards the fastening means (49).

13. Device according to any of the claims 8-12, wherein on the side of the frame (46) of the sleighs (11, 12) facing away from the beam (9, 10) there is arranged a first plate (59) which is slideable by means of a sliding device perpendicular to the longitudinal axis (23, 24) of the associated beams (9, 10) and perpendicular to the vertical longitudinal axis (40) of the tower (2), which plate (59) is adapted to carry the object.

14. Device according to claim 13, wherein the sliding device comprises a screw (62) which is movable along its longitudinal axis by means of a motor driven side transporting nut (63) which is arranged on the frame (46) of the sleighs (11, 12).

15. Device according to claim 13 or 14, wherein on the side of the first plate (59) facing away from the beam (9, 10) is arranged a second plate (67) which is slidable parallel to the vertical longitudinal axis (40) of the tower (2), which second plate (67) is adapted to carry the object.
